# EUROPEAN PATENT APPLICATION

(11) **EP 4 819 375 A1**
(43) Date of publication of application: **07.10.2026**
(21) Application number: 25857310.4
(22) Date of filing: 14.08.2025
(51) Int. Cl.: H01M 50/627, H01M 50/30, H01M 50/392, H01M 50/584, H01M 50/593, H01M 50/59, H01M 50/588

(54) **SECONDARY BATTERY**

(30) Priority: 19.08.2024 KR 20240110669; 07.01.2025 KR 20250002469; 06.08.2025 KR 20250107968
(71) Applicant: LG Energy Solution, Ltd., Seoul 07335 (KR)
(72) Inventor: LEE, Hyun Hee, Daejeon 34122 (KR); DO, Jin Uk, Daejeon 34122 (KR); YANG, Si Hyeong, Daejeon 34122 (KR); PARK, Jin Sub, Daejeon 34122 (KR)
(74) Representative: Goddar, Heinz J.
(86) International application number: PCT/KR2025/012374
(87) International publication number: WO 2026/043221

(57) **Abstract**

A secondary battery includes: an electrode assembly with a positive electrode and a negative electrode, a case into which the electrode assembly is inserted, a cap plate coupled to the case, and an insulating member disposed between the cap plate and the electrode assembly, wherein the insulating member includes a guide hole located below an electrolyte injection hole formed in the cap plate, and a guide protruding downwardly from the guide hole to facilitate a movement of an electrolyte.

## Description

### Technical Field

The present disclosure relates to a rechargeable secondary battery.

### Background Art

Recently, as the demand for portable electronic products such as notebook computers, video cameras, and portable telephones has rapidly increased, and as the development of electric vehicles, energy storage batteries, robots, and satellites has been accelerated, researches on high-performance secondary batteries allowing repeated charging and discharging are actively conducted.

Currently, commercially available secondary batteries include, for example, nickel-cadmium batteries, nickel-hydrogen batteries, nickel-zinc batteries, and lithium secondary batteries. Of these secondary batteries, lithium secondary batteries are gaining considerable attention due to their advantages including a substantially low memory effect to allow a high degree of freedom in charging and discharging, a very low self-discharging rate, and a high energy density, as compared to nickel-based secondary batteries.

Lithium secondary batteries mainly use lithium-based oxides and carbon materials as the positive electrode active material and the negative electrode active material, respectively. Further, lithium secondary batteries include a positive electrode plate and a negative electrode plate coated with the positive electrode active material and the negative electrode active material, respectively, an electrode assembly in which the positive electrode plate and the negative electrode plate are disposed with a separator interposed therebetween, and an outer casing for hermetically accommodating the electrode assembly together with an electrolyte.

According to the shapes of battery cases, lithium secondary batteries may be classified into can-type secondary batteries, in which the electrode assembly is mounted in a metal can, and pouch-type secondary batteries, in which the electrode assembly is mounted in a pouch of an aluminum laminate sheet. The can-type secondary batteries may be further classified into cylindrical batteries and prismatic batteries, according to the shapes of metal cans.

Prismatic batteries are provided with an electrolyte injection hole, and when the electrolyte injection hole is clogged by foreign matter or internal components, problems such as the reduction of electrolyte injection rate and the backflow of electrolyte may occur.

### DISCLOSURE

### Technical Problem

The present disclosure provides a secondary battery into which an electrolyte may easily be injected.

### Technical Solution

According to an aspect of the present disclosure, a secondary battery includes: an electrode assembly with a positive electrode and a negative electrode; a case into which the electrode assembly is inserted; a cap plate coupled to the case; and an insulating member disposed between the cap plate and the electrode assembly, wherein the insulating member may include a guide hole located below an electrolyte injection hole formed in the cap plate, and a guide protruding downwardly from the guide hole to facilitate a movement of an electrolyte.

In an embodiment of the present disclosure, the guide may include a support disposed below the guide hole to partially block the guide hole, and an inner hole formed in the support to allow a movement of a fluid therethrough.

In an embodiment of the present disclosure, the inner hole may face the electrolyte injection hole.

In an embodiment of the present disclosure, the inner hole may be located in a longitudinal center of the guide.

In an embodiment of the present disclosure, the guide may further include a guide rim surrounding a lower portion of the guide hole, and the support is fixed to the guide rim.

In an embodiment of the present disclosure, the guide may further include a first opening and a second opening formed between lateral ends of the support and an inner wall of the guide rim.

In an embodiment of the present disclosure, a width of the support may be about 0.2 times to 0.6 times a diameter of the guide hole.

In an embodiment of the present disclosure, a diameter of the inner hole may be formed to be smaller than a diameter of the electrolyte injection hole, and the inner hole may be located in a lower region corresponding to the electrolyte injection hole.

In an embodiment of the present disclosure, a width of the support may be formed to be larger than a diameter of the electrolyte injection hole.

In an embodiment of the present disclosure, the support may include a first inclined bar and a second inclined bar that are formed to incline downwardly from an outer periphery of the guide hole toward a center thereof.

In an embodiment of the present disclosure, the inner hole may be formed with a diameter gradually increasing downward.

In an embodiment of the present disclosure, the support may include a wedge of which cross-sectional area gradually decreases downward.

In an embodiment of the present disclosure, an impact-absorbing bar may be formed in the inner hole to extend in a diameter direction of the inner hole.

In an embodiment of the present disclosure, the inner hole may include one inlet and a plurality of outlets.

In an embodiment of the present disclosure, the inner hole may include an upper passage extending inwardly from an upper surface of the inner hole, and a plurality of lower passages inclined with respect to the upper passage.

In an embodiment of the present disclosure, a plurality of auxiliary holes may be formed in the guide rim, to be arranged along a circumferential direction of the guide rim.

In an embodiment of the present disclosure, a vent hole may be formed in the cap plate to discharge a gas, the insulating member may include an exhaust portion protruding downwardly and including a plurality of discharge openings, and the exhaust portion may be disposed below the vent hole.

In an embodiment of the present disclosure, the exhaust portion may include a support frame protruding downwardly in a ring shape, and a plurality of blocking bars fixed to the support frame and extending in a width direction of the insulating member.

In an embodiment of the present disclosure, each of the plurality of discharge openings may be formed with a cross-sectional area gradually increasing toward the cap plate.

In an embodiment of the present disclosure, a porous plate may be provided in a bottom of the exhaust portion, and the porous plate may be disposed between the plurality of discharge openings.

In an embodiment of the present disclosure, in the cap plate, a terminal hole may be formed into which a terminal electrically connected to the electrode assembly is inserted, and a coupling protrusion may be formed to protrude toward the insulating member and surround the terminal hole. In the insulating member, a coupling groove may be formed into which the coupling protrusion is inserted.

In an embodiment of the present disclosure, in an inner side of the coupling protrusion of the cap plate, a lower groove may be formed into which a gasket and the insulating member are inserted, and in an inner side of the coupling groove of the insulating member, a sealing rim may be formed to be inserted into the lower groove.

In an embodiment of the present disclosure, when a length of the insulating member is DL1, and a width of the insulating member is DW1, 8DW1≤DL1≤15DW1 may be satisfied.

In an embodiment of the present disclosure, the length of the insulating member may be 190 mm to 310 mm, and the width of the insulating member may be 18 mm to 82 mm.

In an embodiment of the present disclosure, when a thickness of the insulating member is DT1, and a thickness of the cap plate is CT1, 0.4CT1≤DT1≤0.9CT1 may be satisfied.

In an embodiment of the present disclosure, the thickness of the insulating member may be 0.9 mm to 1.8 mm, and the thickness of the cap plate may be 1.5 mm to 3.5 mm.

### Advantageous Effects

In a secondary battery according to an embodiment of the present disclosure, the guide for electrolyte injection is provided in the insulating member disposed below the cap plate, so that the electrolyte may easily be injected.

### Brief Description of Drawings

The drawings attached herewith are merely illustrative of embodiments of the present disclosure, and take on the role of further facilitating the understanding of the technical idea of the present disclosure along with the descriptions herein. Thus, the present disclosure should not be construed as being limited to those illustrated in the drawings.
FIG. 1 is a perspective view illustrating a secondary battery according to a first embodiment of the present disclosure.
FIG. 2 is a perspective view illustrating a state where a portion of the secondary battery of FIG. 1 is disassembled.
FIG. 3 is a sectional view cut along line III-III in FIG. 1.
FIG. 4 is a plan view illustrating the secondary battery according to the first embodiment of the present disclosure.
FIG. 5 is a perspective view of an insulating member of the secondary battery according to the first embodiment of the present disclosure, when viewed from above.
FIG. 6 is a perspective view of the insulating member of the secondary battery according to the first embodiment of the present disclosure, when viewed from below.
FIG. 7 is a bottom view of the insulating member of the secondary battery according to the first embodiment of the present disclosure, when viewed from below.
FIG. 8 is a partial sectional view illustrating a cap plate and the insulating member according to the first embodiment of the present disclosure.
FIG. 9 is a sectional perspective view illustrating a guide of the insulating member according to the first embodiment of the present disclosure.
FIG. 10 is a sectional view illustrating an exhaust portion of the insulating member according to the first embodiment of the present disclosure.
FIG. 11 is a sectional view illustrating a guide according to a second embodiment of the present disclosure.
FIG. 12 is a perspective view illustrating a support according to the second embodiment of the present disclosure.
FIG. 13 is a sectional view illustrating a guide according to a third embodiment of the present disclosure.
FIG. 14 is a sectional view illustrating a guide according to a fourth embodiment of the present disclosure.
FIG. 15 is a perspective view illustrating a guide according to the fourth embodiment of the present disclosure.
FIG. 16 is a perspective view of an insulating member of a secondary battery according to a fifth embodiment of the present disclosure, when viewed from above.
FIG. 17 is a longitudinal sectional view illustrating the secondary battery according to the fifth embodiment of the present disclosure.
FIG. 18 is an enlarged view illustrating region A1 in FIG. 17.
FIG. 19 is a sectional view illustrating a guide according to a sixth embodiment of the present disclosure.
FIG. 20 is a sectional view illustrating a guide according to a seventh embodiment of the present disclosure.
FIG. 21 is a perspective view illustrating an exhaust portion of an insulating member according to an eighth embodiment of the present disclosure.
FIG. 22 is a sectional view illustrating the exhaust portion of the insulating member according to the eighth embodiment of the present disclosure.
FIG. 23 is a sectional view illustrating an exhaust portion of an insulating member according to a ninth embodiment of the present disclosure.

In some of the accompanying drawings, corresponding components will be denoted with the same reference numerals. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### Mode For Invention

Since the present disclosure may be subjected to various modifications and include various embodiments, specific embodiments of the present disclosure will be described in detail. However, the present disclosure is not limited to the specific embodiments, but should be construed as including all modifications, equivalents, or substitutions that fall within the technical idea and scope of the present disclosure.

Terms used herein below are merely intended to describe the specific embodiments, and are not intended to limit the present disclosure. A singular expression includes the plural unless the context clearly indicates otherwise. In the descriptions herein below, terms such as "include" and "have" are intended to designate the presence of features, numerals, steps, operations, components, parts, and combinations thereof described herein, but should not be interpreted to exclude the presence or possible addition of one or more other features, numerals, steps, operations, components, parts, and combinations thereof.

Hereinafter, embodiments of the present disclosure will be described with reference to the accompanying drawings. It should be noted that in the accompanying drawings, identical components are denoted with the same reference numerals as possible. Further, detailed descriptions of well-known functions and configurations will be omitted if determined to obscure the gist of the present disclosure. For the same reason, some components may be exaggerated, omitted, or schematically illustrated in the accompanying drawings.

Hereinafter, a secondary battery according to an embodiment of the present disclosure will be described.

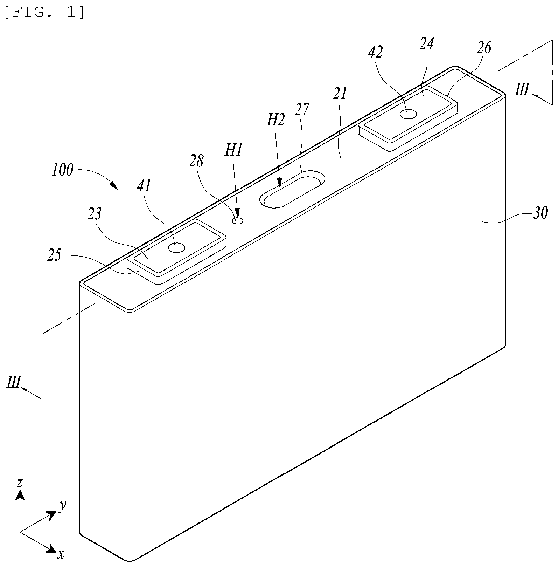

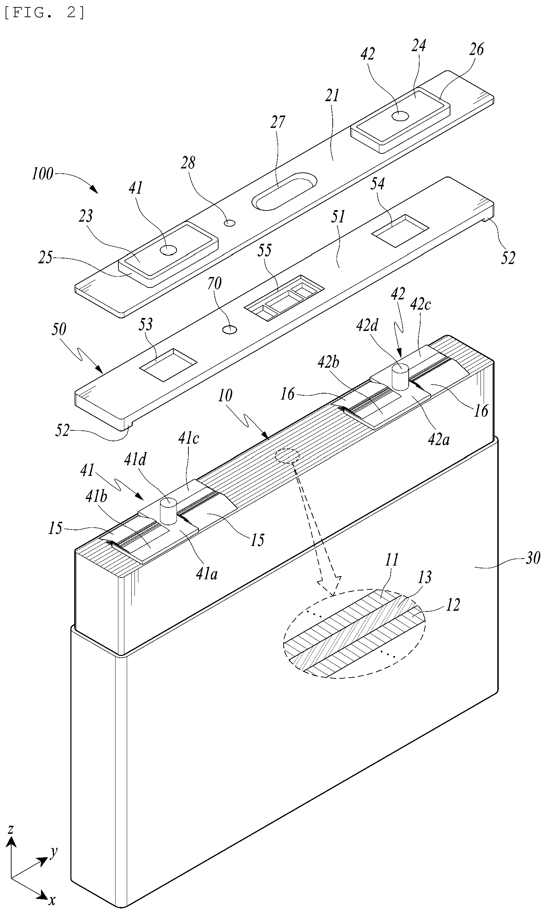

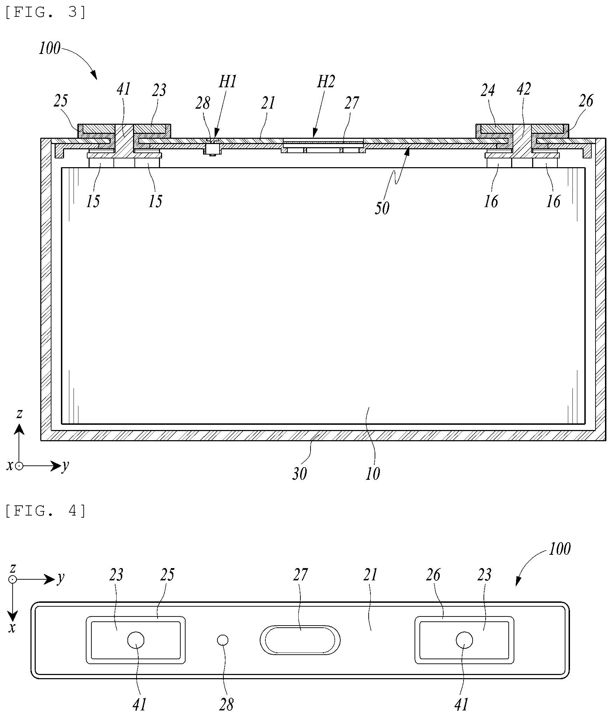

FIG. 1 is a perspective view illustrating a secondary battery according to a first embodiment of the present disclosure. FIG. 2 is a perspective view illustrating a state where a portion of the secondary battery of FIG. 1 is disassembled. FIG. 3 is a sectional view cut along the line III-III in FIG. 1. FIG. 4 is a plan view illustrating the secondary battery according to the first embodiment of the present disclosure.

Referring to FIGS. 1 to 3, a secondary battery 100 according to the present embodiment includes an electrode assembly 10 including a positive electrode 11 and a negative electrode 12, a case 30 accommodating the electrode assembly 10, a cap plate 21 coupled to the case 30, terminals 23 and 24 provided on the cap plate 21, and an insulating member 50 disposed between the cap plate 21 and the electrode assembly 10.

The electrode assembly 10 includes the positive electrode 11, the negative electrode 12, and a separator 13 disposed between the positive electrode 11 and the negative electrode 12, and the positive electrode 11, the separator 13, and the negative electrode 12 may be provided in a stacked structure or wound in a jelly roll form. Further, the electrode assembly 10 may have a structure in which the positive electrode 11 and the negative electrode 12 are alternately inserted between sheets of the separator 13 bent in a zigzag shape. Further, the electrode assembly 10 may be manufactured in various forms such as an all-solid-state type.

Each of the positive electrode 11 and the negative electrode 12 may include a coated portion that is a region of a metal foil to which an active material is applied, and an uncoated portion where no active material is applied. A positive electrode uncoated portion 15 may protrude from the lateral end of the positive electrode 11, and a negative electrode uncoated portion 16 may protrude from the lateral end of the negative electrode 12. The positive electrode uncoated portion 15 and the negative electrode uncoated portion 16 may protrude in the same direction, for example, in the direction toward the cap plate 21 (z-axis direction).

The positive electrode uncoated portion 15 and the negative electrode uncoated portion 16 are formed in a tab shape, and may be spaced apart from each other in the width direction of the case 30 (y-axis direction). Positive electrode uncoated portions 15 and negative electrode uncoated portions 16 may be stacked in the thickness direction of the case 30 (x-axis direction).

Further, the positive electrode uncoated portion 15 may be connected to the first terminal 23 via a current collecting member 41, and the negative electrode uncoated portion 16 may be connected to the second terminal 24 via a current collecting member 42.

The separator 13 is disposed between the positive electrode 11 and the negative electrode 12, to prevent or suppress short circuits and allow the movement of ions. When the secondary battery 100 is an all-solid-state battery, a solid electrolyte, instead of the separator 13, may be disposed between the positive electrode 11 and the negative electrode 12.

The case 30 may be formed in a box shape with an interior space for accommodating the electrode assembly 10. The case 30 may be formed in various shapes such as a prismatic shape and a cylindrical shape. A single electrode assembly 10 may be inserted into the case 30, or a plurality of electrode assemblies 10 may be inserted into the case 30.

Together with the electrode assembly 10, an electrolyte may be accommodated in the case 30. The electrolyte may be provided in a liquid, solid, or gel state.

The cap plate 21 is made of a plate material covering an opening of the case 30, and may have a shape corresponding to the shape of the opening of the case 30. The cap plate 21 may be fixed to the case 30 through welding.

In the cap plate 21, an electrolyte injection hole H1 may be formed, through which an electrolyte is injected, and a vent hole H2 may be formed, in which a vent member 27 is installed. In the electrolyte injection hole H1, a sealing cap 28 may be provided to plug the electrolyte injection hole H1, and in the vent hole H2, the vent member 27 may be formed to open at a predetermined internal pressure.

The terminals 23 and 24 are coupled to the cap plate 21, and one or two terminals 23 and 24 may be provided on the cap plate 21. When two terminals 23 and 24 are provided on the cap plate 21, the first terminal 23 may act as a positive electrode terminal, and the second terminal 24 may act as a negative electrode terminal. When one terminal is provided on the cap plate 21, the case 30 may be charged as a negative electrode.

The first terminal 23 and the second terminal 24 may be formed in a plate shape. A gasket 25 for electrical insulation may be provided between the first terminal 23 and the cap plate 21, and a gasket 26 for electrical insulation may be provided between the second terminal 24 and the cap plate 21. The gaskets 25 and 26 may extend downwardly to be also located between the current collecting members 41 and 42 and the cap plate 21. Each of the gaskets 25 and 26 may be formed as a single member, or may be divided into a plurality of members.

The first terminal 23 may be electrically connected to the positive electrode uncoated portion 15 via the first current collecting member 41, and the second terminal 24 may be electrically connected to the negative electrode uncoated portion 16 via the second current collecting member 42.

The first terminal 23 and the second terminal 24 may be formed in a plate shape, and a hole may be formed at the center of each of the first terminal 23 and the second terminal 24 such that a connection column of the first current collecting member 41 or the second current collecting member 42 is inserted thereinto.

The electrode assembly 10 may include two positive electrode uncoated portion arrays with the same polarity, and the positive electrode uncoated portion arrays may be disposed without overlapping in the length direction (y-axis direction) and the thickness direction (x-axis direction) of the electrode assembly 10.

Further, the electrode assembly 10 may include two negative electrode uncoated portion arrays with the same polarity, and the negative electrode uncoated portion arrays may be disposed without overlapping in the length direction (y-axis direction) and the thickness direction (x-axis direction) of the electrode assembly 10.

The first current collecting member 41 may include a center portion 41a, a first current collecting projection 41b projecting from one lateral end of the center portion 41a, a second current collecting projection 41c projecting from the other lateral end of the center portion, and a connection column 41d protruding from the center portion toward the cap plate. The first current collecting projection 41b and the second current collecting projection 41c may be spaced apart from each other in the length direction (y-axis direction) and the thickness direction (x-axis direction) of the electrode assembly.

The positive electrode uncoated portions 15 may be bonded to the first current collecting projection 41b and the second current collecting projection 41c, and the positive electrode uncoated portion arrays may be bent in opposite directions and fixed to the first current collecting projection 41b or the second current collecting projection 41c by welding. The positive electrode uncoated portions 15 may be bonded to the upper surface of the first current collecting projection 41b or the second current collecting projection 41c.

The connection column 41d has a cylindrical shape, and may be formed integrally with the center portion. However, the present disclosure is not limited thereto, and the connection column may be fixed to the center portion by welding.

The second current collecting member 42 may include a center portion 42a, a first current collecting projection 42b projecting from one lateral end of the center portion 42a, a second current collecting projection 42c projecting from the other lateral end of the center portion 42a, and a connection column 42d protruding from the center portion 42a toward the cap plate 21. The first current collecting projection 42b and the second current collecting projection 42c may be spaced apart from each other in the length direction (y-axis direction) and the thickness direction (x-axis direction) of the electrode assembly 10.

The negative electrode uncoated portions 16 may be bonded to the first current collecting projection 42b and the second current collecting projection 42c, and the negative electrode uncoated portion arrays may be bent in opposite directions and fixed to the first current collecting projection 42b or the second current collecting projection 42c by welding. The negative electrode uncoated portions 16 may be bonded to the upper surface of the first current collecting projection 42b or the second current collecting projection 42c.

The connection column 41d of the first current collecting member 41 may be bonded by a welding in the state of being inserted into the first terminal 23, and the connection column 42d of the second current collecting member 42 may be bonded by a welding in the state of being inserted into the second terminal 24.

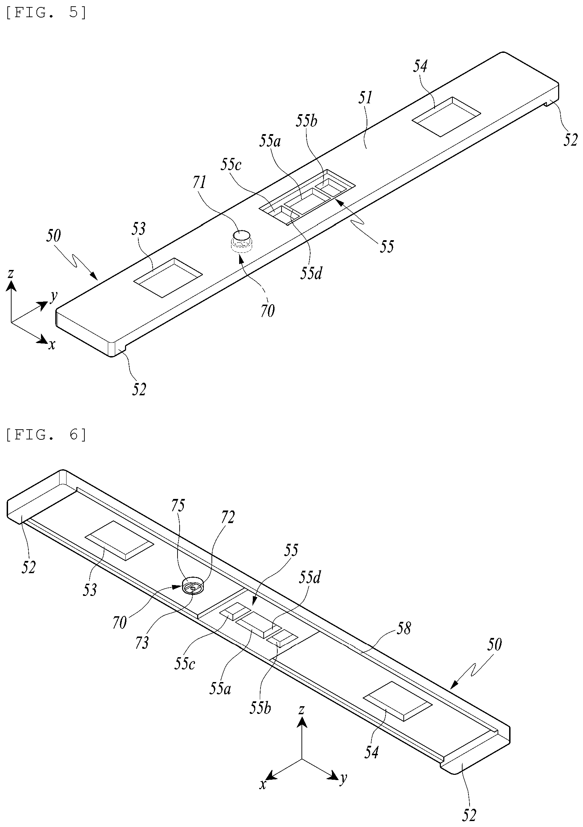

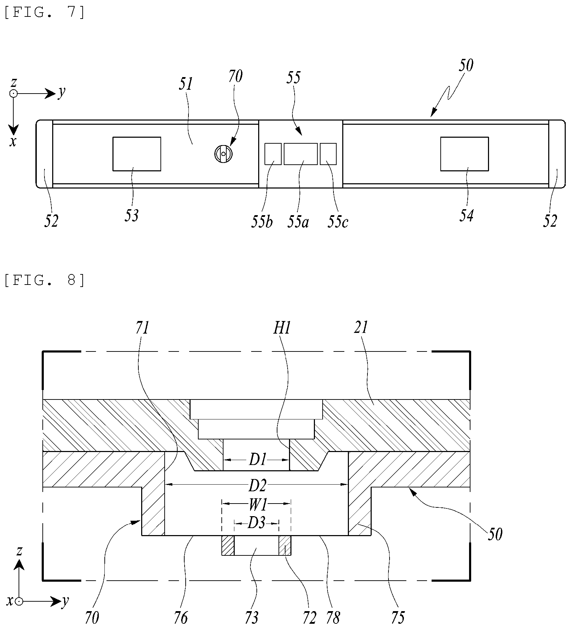

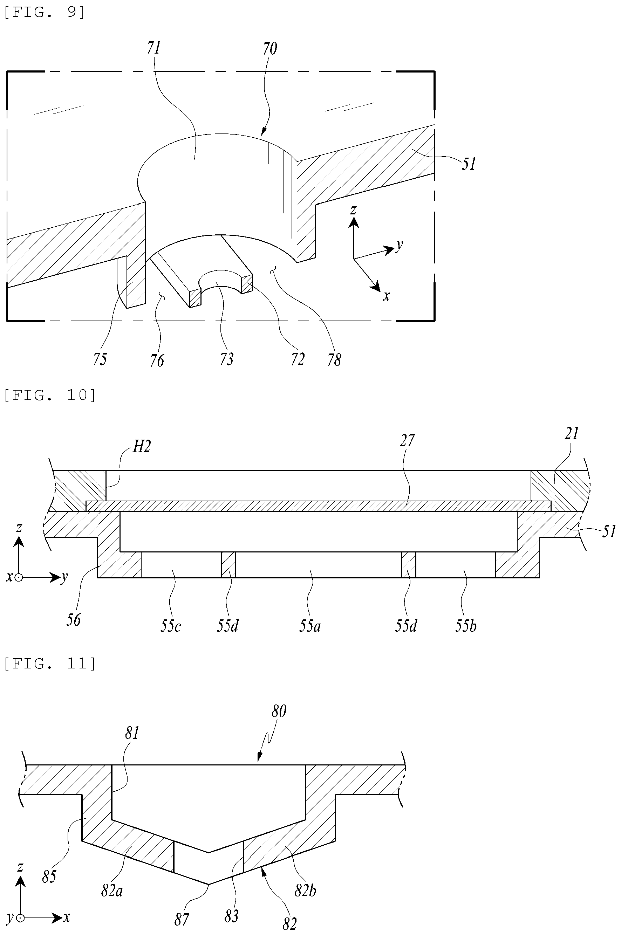

FIG. 5 is a perspective view of the insulating member of the secondary battery according to the first embodiment of the present disclosure, when viewed from above. FIG. 6 is a perspective view of the insulating member of the secondary battery according to the first embodiment of the present disclosure, when viewed from below. FIG. 7 is a bottom view of the insulating member of the secondary battery according to the first embodiment of the present disclosure, when viewed from below. FIG. 8 is a partial sectional view illustrating the cap plate and the insulating member according to the first embodiment of the present disclosure. FIG. 9 is a sectional perspective view illustrating a guide of the insulating member according to the first embodiment of the present disclosure.

Referring to FIGS. 5 to 9, the insulating member 50 is provided between the cap plate 21 and the electrode assembly 10 to electrically insulate the cap plate 21 and the electrode assembly 10. The insulating member 50 may have a shape corresponding to the cap plate 21, and may be formed in an elongated square plate shape. The insulating member 50 may be disposed to face the cap plate 21, and may be disposed parallel to the cap plate 21.

The insulating member 50 may include a base plate 51 having a square plate shape and two support projections 52 projecting downwardly toward the case 30 from both ends of the base plate 51 in the longitudinal direction of the base plate 51 (y-axis direction).

In the base plate 51, a first hole 53 may be formed, into which the lower end of the gasket 25 of the first terminal 23 is inserted, and a second hole 54 may be formed, into which the lower end of the gasket 26 of the second terminal 24 is inserted.

Further, the insulating member 50 may include a guide hole 71 located below the electrolyte injection hole H1, a guide 70 protruding downwardly from the guide hole 71, and an exhaust portion 55 disposed below the vent hole H2. In FIG. 5, the downwardly protruding guide 70 is represented by a dotted line.

The guide 70 protruding downwardly from the guide hole 71 may include a guide rim 75 surrounding the lower portion of the guide hole 71, a support 72 disposed below the guide hole 71 to partially block the guide hole 71, and an inner hole 73 formed in the support 72 to allow a movement of fluid therethrough. According to an embodiment, the guide rim 75 may be formed in a circular ring shape, and the support 72 may be formed in a straight bar shape. The support 72 may be fixed to the lower end of the guide rim 75, and extend in the diameter direction of the guide hole 71.

The inner hole 73 is disposed at the center of the support 72 in the longitudinal direction thereof, and may be formed to face the electrolyte injection hole H1. The diameter D3 of the inner hole 73 is formed to be smaller than the diameter D1 of the electrolyte injection hole H1, and the inner hole 73 may be located in a lower region corresponding to the electrolyte injection hole H1.

Meanwhile, the diameter D2 of the guide hole 71 may be formed to be larger than the diameter D1 of the electrolyte injection hole H1. The width W1 of the support 72 may be about 0.2 times to 0.6 times the diameter D2 of the guide hole 71. The width W1 of the support 72 may be formed to be larger than the diameter D1 of the electrolyte injection hole H1, and may be about 1.1 times to 1.5 times the diameter D1 of the electrolyte injection hole H1.

A first opening 76 and a second opening 78 may be formed between the lateral ends of the support 72 and the inner wall of the guide rim 75, and may be opened downward while being spaced apart from each other with the support 72 disposed therebetween.

The insulating member 50 is disposed below the cap plate 21, and an electrolyte is injected into the electrolyte injection hole H1 in the state where the cap plate 21 is coupled to the case 30. When the guide 70 including the guide rim 75, the support 72, and the guide hole 71 is formed in the insulating member 50, the electrolyte injection hole H1 may be prevented or suppressed from being blocked by a lower structure, and the electrolyte may easily be injected.

Further, since the inner hole 73 is located directly below the electrolyte injection hole H1, the electrolyte may move into the case 30 through the inner hole 73, so that the flowback of the electrolyte may be prevented or suppressed, and in the event where the inner hole 73 is clogged or the electrolyte is supplied in a large amount, the electrolyte may be injected into the case through the first opening 76 and the second opening 78 formed on both sides of the support 72.

FIG. 10 is a sectional view illustrating the exhaust portion of the insulating member according to the first embodiment of the present disclosure.

Referring to FIGS. 5 and 10, the exhaust portion 55 is disposed below the vent hole H2, and includes a plurality of discharge openings. The exhaust portion 55 may include a support frame 56 protruding downwardly in a ring shape, and a plurality of blocking bars 55d fixed to the support frame 56 and extending in the width direction of the insulating member 50 (x-axis direction). A first discharge opening 55a may be formed in the center of the exhaust portion 55, and a second discharge opening 55b and a third discharge opening 55c may be formed on both sides of the first discharge opening 55a. The first discharge opening 55a has a larger cross-sectional area than each of the second discharge opening 55b and the third discharge opening 55c.

In this way, when the exhaust portion 55 is provided in the insulating member 50, the vent member 27 may rupture at a predetermined pressure in the event where the pressure inside the case 30 increases, so that a gas inside the case 30 may easily be discharged.

Hereinafter, a secondary battery according to a second embodiment of the present disclosure will be described.

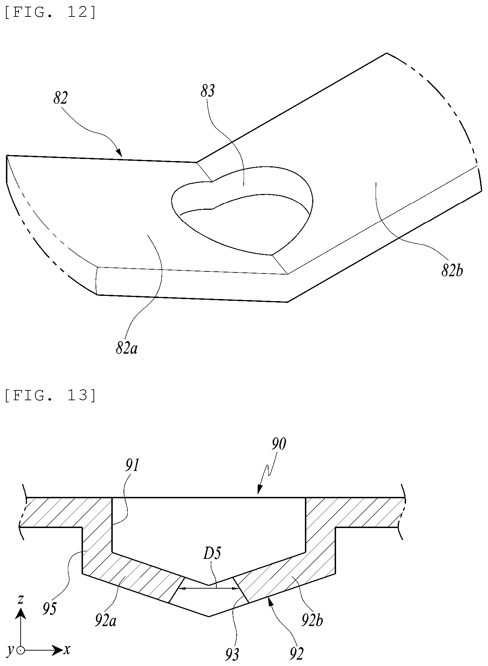

FIG. 11 is a sectional view illustrating a guide according to the second embodiment of the present disclosure, and FIG. 12 is a perspective view illustrating a support according to the second embodiment of the present disclosure.

Referring to FIGS. 11 and 12, since the secondary battery according to the present embodiment has the same structure as the secondary battery according to the first embodiment described above, except for the insulating member, overlapping descriptions of the same structure will be omitted.

A guide 80 may be formed in the insulating member, and may include a guide rim 85 surrounding the lower portion of a guide hole 81, a support 82 disposed below the guide hole 81 to partially block the guide hole 81, and an inner hole 83 formed in the support 82 to allow a movement of fluid therethrough.

The guide rim 85 may be formed in a circular ring shape or a square ring shape, and the support 82 may include a first inclined bar 82a and a second inclined bar 82b that are formed to incline downwardly from the outer periphery of the guide hole 81 toward the center thereof. Thus, the support 82 may be formed to be the lowest at the longitudinal center portion thereof, and the inner hole 83 may be formed in the longitudinal center portion.

A bottom edge 87 may be formed at the longitudinal center of the support 82, and may push the lower substructure downwardly to provide a passage through which the electrolyte is injected.

FIG. 13 is a sectional view illustrating a guide according to a third embodiment of the present disclosure.

Referring to FIG. 13, since the secondary battery according to the present embodiment has the same structure as the secondary battery according to the first embodiment described above, except for the insulating member, overlapping descriptions of the same structure will be omitted.

A guide 90 may be formed in the insulating member, and may include a guide rim 95 surrounding the lower portion of a guide hole 91, a support 92 disposed below the guide hole 91 to partially block the guide hole 91, and an inner hole 93 formed in the support 92 to allow a movement of fluid therethrough.

The guide rim 95 may be formed in a circular ring shape or a square ring shape, and the support 92 may include a first inclined bar 92a and a second inclined bar 92b that are formed to incline downwardly from the outer periphery of the guide hole 91 toward the center thereof. Thus, the support 92 may be formed to be the lowest at the longitudinal center portion thereof, and the inner hole 93 may be formed in the longitudinal center portion.

The inner hole 93 is formed such that the diameter D5 thereof gradually increases downward, and therefore, the flow rate of the electrolyte in the inner hole 93 may be reduced. When the flow rate of the electrolyte is reduced, it is possible to prevent or suppress the deformation of the upper portion of the separator caused by the impact of the electrolyte.

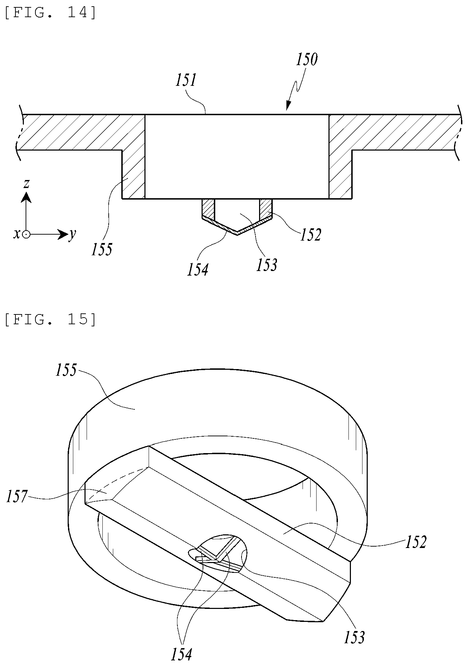

FIG. 14 is a sectional view illustrating a guide according to a fourth embodiment of the present disclosure, and FIG. 15 is a perspective view illustrating the guide according to the fourth embodiment of the present disclosure.

Referring to FIGS. 14 and 15, since the secondary battery according to the present embodiment has the same structure as the secondary battery according to the first embodiment described above, except for the insulating member, overlapping descriptions of the same structure will be omitted.

A guide 150 may be formed in the insulating member, and may include a guide rim 155 surrounding the lower portion of a guide hole 151, a support 152 disposed below the guide hole 151 to partially block the guide hole 151, and an inner hole 153 formed in the support 152 to allow a movement of fluid therethrough.

The guide rim 155 may be formed in a circular ring shape or a square ring shape, and the support 152 may extend in the diameter direction of the guide hole 151. An inner hole 153 may be formed in the longitudinal center portion of the support 152.

In the lower portion of the support 152, a wedge 157 may be formed such that the cross-sectional area thereof gradually decreases downward. Further, at least one or more impact-absorbing bars 154 are formed in the inner hole 153 to extend in the diameter direction of the inner hole 153, and a plurality of impact-absorbing bars 154 may be formed to intersect each other. The impact-absorbing bars 154 may be fixed to the lower end of the inner hole 153.

Hereinafter, a secondary battery according to a fifth embodiment of the present disclosure will be described.

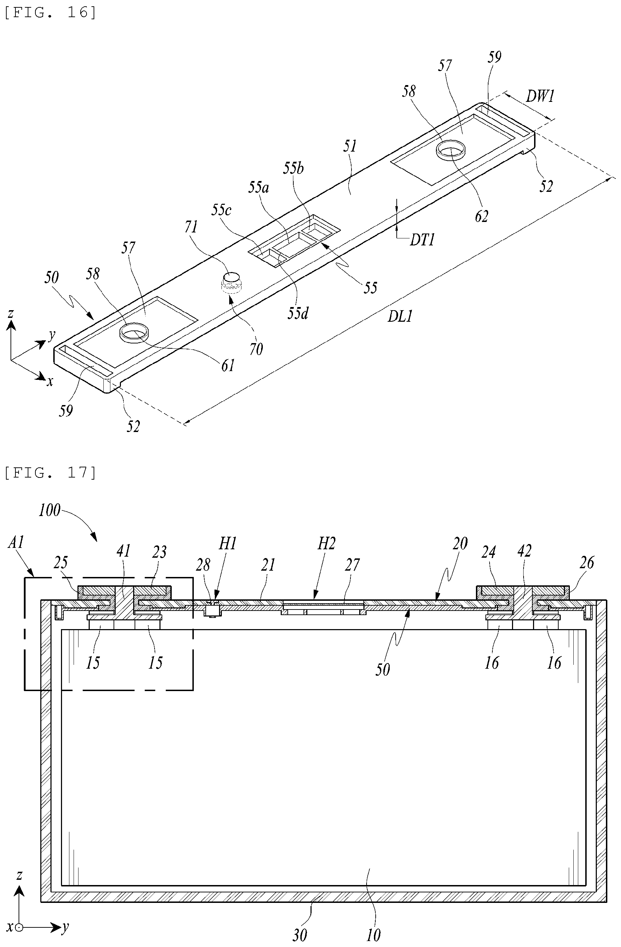

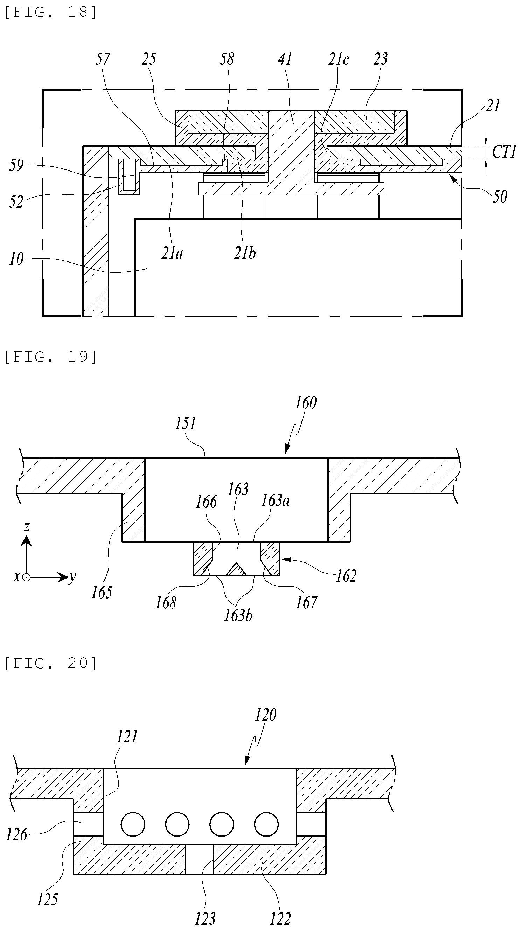

FIG. 16 is a perspective view illustrating an insulating member of a secondary battery according to the fifth embodiment of the present disclosure, when viewed from above. FIG. 17 is a longitudinal sectional view of the secondary battery according to the fifth embodiment of the present disclosure. FIG. 18 is an enlarged view of the region A1 in FIG. 17.

Referring to FIGS. 16 to 18, since the secondary battery according to the present embodiment has the same structure as the secondary battery according to the first embodiment described above, except for the insulating member 50 and the cap plate 21, overlapping descriptions of the same structure will be omitted.

Two terminal holes 21c may be formed in the cap plate 21, and the current collecting members 41 and 42 and the gaskets 25 and 26 may be inserted into the terminal holes 21c. However, the present disclosure is not limited thereto, and for example, the terminals 23 and 24 and connection rivets may be inserted into the terminal holes 21c.

A coupling protrusion 21a may be formed on the lower surface of the cap plate 21 to protrude toward the insulating member 50, and the coupling protrusion 21a may be inserted into the insulating member 50. The coupling protrusion 21a may be formed to surround the terminal hole 21c. In the inner side of the coupling protrusion 21a, a lower groove 21b may be formed, into which the gasket 25 or 26 and the insulating member 50 are inserted.

Meanwhile, the insulating member 50 is provided between the cap plate 21 and the electrode assembly 10 to electrically insulate the cap plate 21 and the electrode assembly 10. In the insulating member 50, a first hole 61 and a second hole 62 may be formed, into which the gaskets 25 and 26 are inserted, respectively.

The insulating member 50 may include the base plate 51 having a square plate shape, and the two support projections 52 projecting downwardly toward the case 30 from both ends of the base plate 51 in the longitudinal direction of the base plate 51 (y-axis direction). A side groove 59 may be formed in the outer upper side of each support projection 52.

In the upper surface of the insulating member 50 that faces the cap plate 21, a coupling groove 57 may be formed such that the coupling protrusion 21a is inserted thereinto. Thus, when the coupling protrusion 21a is fitted into and coupled to the coupling groove 57, the insulating member 50 may be stably supported on the cap plate 21 without moving.

A sealing rim 58 may be formed on the inner side of the coupling groove 57, to protrude toward the cap plate 21 and be inserted into the lower groove 21b. The sealing rim 58 may be formed to surround the first hole 61 or the second hole 62. The sealing rim 58 may be inserted into the lower groove 21b together with the gasket 25 or 26, to seal the terminal hole 21c of the cap plate 21 and prevent the movement of the gasket 25 or 26.

When the length of the insulating member 50 is DL1, and the width of the insulating member 50 is DW1, 8DW1≤DL1≤15DW1 may be satisfied. In this case, the length DL1 of the insulating member 50 may be 190 mm to 310 mm, and the width DW1 of the insulating member 50 may be 18 mm to 82 mm. When the length DL1 and the width DW1 of the insulating member 50 satisfy 8DW1≤DL1≤15DW1, the insulating member 50 may stably insulate the cap plate 21 and the electrode assembly 10, and the electrolyte may easily be injected.

Further, when the thickness of the insulating member 50 is DT1, and the thickness of the cap plate 21 is CT1, 0.4CT1≤DT1≤0.9CT1 may be satisfied. In this case, the thickness DT1 of the insulating member 50 may be 0.9 mm to 1.8 mm, and the thickness CT1 of the cap plate 21 may be 1.5 mm to 3.5 mm. Further, the width DW1 of the insulating member 50 may be 17 times to 29 times the thickness DT1 of the insulating member 50.

When the thickness DT1 of the insulating member 50 and the thickness CT1 of the cap plate 21 satisfy 0.4CT1≤DT1≤0.9CT1, the insulating member 50 is stably coupled to the cap plate 21, so that the insulating member 50 may guide the injection of the electrolyte while performing the stable insulation.

According to the present embodiment, the lower groove 21b and the sealing rim 58 are formed, so that the insulating member 50 may be more stably coupled to the cap plate 21 without wobbling, the terminal hole 21c may be reliably sealed, and the movement of the gaskets 25 and 26 may be prevented.

Hereinafter, a secondary battery according to a sixth embodiment of the present disclosure will be described.

FIG. 19 is a sectional view illustrating a guide according to the sixth embodiment of the present disclosure.

Referring to FIG. 19, since the secondary battery according to the present embodiment has the same structure as the secondary battery according to the first embodiment described above, except for the insulating member, overlapping descriptions of the same structure will be omitted.

A guide 160 may be formed in the insulating member, and may include a guide rim 165 surrounding the lower portion of a guide hole 161, a support 162 disposed below the guide hole 161 to partially block the guide hole 161, and an inner hole 163 formed in the support 162 to allow a movement of fluid therethrough.

The guide rim 165 may be formed in a circular ring shape, the support 162 may extend in the diameter direction of the guide hole 161, and the inner hole 163 may be formed in the longitudinal center portion of the support 162.

The inner hole 163 includes one inlet 163a and a plurality of outlets 163b, and may include two outlets 163b. Further, the inner hole 163 may include an upper passage 166 extending inwardly from the upper surface thereof, and two lower passages 167 inclined with respect to the upper passage 166.

As described above, according to the present embodiment, in the inner hole 163, one passage branches into a plurality of passages so that the electrolyte may be injected in various directions. Therefore, the electrolyte may be stably injected, and the injection rate of the electrolyte is reduced, which may prevent or suppress the deformation of the separator caused by the electrolyte.

Hereinafter, a secondary battery according to a seventh embodiment of the present disclosure will be described.

FIG. 20 is a sectional view illustrating a guide according to the seventh embodiment of the present disclosure.

Referring to FIG. 20, since the secondary battery according to the present embodiment has the same structure as the secondary battery according to the first embodiment described above, except for the insulating member, overlapping descriptions of the same structure will be omitted.

A guide 120 may be formed in the insulating member, and may include a guide rim 125 surrounding the lower portion of a guide hole 121, a support 122 disposed below the guide hole 121 to partially block the guide hole 121, and an inner hole 123 formed in the support 122 to allow a movement of fluid therethrough.

The guide rim 125 may be formed in a ring shape, the support 122 may extend in the diameter direction of the guide hole 121, and the inner hole 123 may be formed in the longitudinal center portion of the support 122.

A plurality of auxiliary holes 126 may be formed in the guide rim 125, and may be arranged along the circumferential direction of the guide rim 125. When the auxiliary holes 126 are formed as in the present embodiment, the electrolyte may move through the auxiliary holes 126 in the event where the electrolyte does not move smoothly through the bottom of the guide rim 125, so that the backflow of the electrolyte may be prevented or suppressed.

Hereinafter, a secondary battery according to an eighth embodiment of the present disclosure will be described.

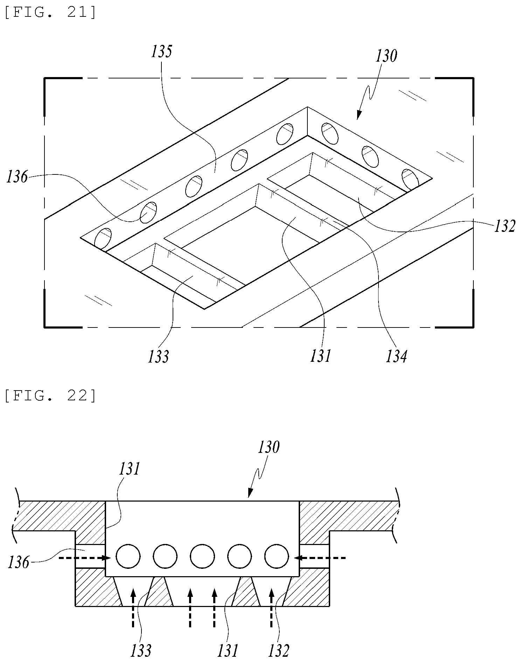

FIG. 21 is a perspective view illustrating an exhaust portion of an insulating member according to the eighth embodiment of the present disclosure, and FIG. 22 is a sectional view illustrating the exhaust portion of the insulating member according to the eighth embodiment of the present disclosure.

Referring to FIGS. 21 and 22, since the secondary battery according to the present embodiment has the same structure as the secondary battery according to the first embodiment described above, except for the insulating member, overlapping descriptions of the same structure will be omitted.

The exhaust portion 130 may include a support frame 135 protruding downwardly in a ring shape, and a plurality of blocking bars 134 fixed to the support frame 135 and extending in the width direction of the insulating member 50 (x-axis direction). A first discharge opening 131 is formed in the center of the exhaust portion 130, and a second discharge opening 132 and a third discharge opening 133 may be formed on both sides of the first discharge opening 131.

A plurality of peripheral holes 136 is formed in the support frame 135, and the peripheral holes 136 may be arranged in the peripheral direction of the support frame 135. Each of the first discharge opening 131, the second discharge opening 132, and the third discharge opening 133 may be formed such that the cross-sectional area thereof gradually increases upward.

When the peripheral holes 136 are formed in the support frame 135 as in the present embodiment, the lateral discharge flow of a gas may be formed, in addition to the upward discharge flow of a gas, during the discharge of a gas, so that the rate of the flow directed toward the top of the case may be reduced, and materials such as the electrolyte accommodated in the case may be prevented or suppressed from being discharged through the vent hole.

Further, when the cross-sectional area of each discharge opening increases upward, the discharge rate of a gas may be reduced, which may prevent or suppress a damage to components or the like caused by the discharge of a gas.

Hereinafter, a secondary battery according to a ninth embodiment of the present disclosure will be described.

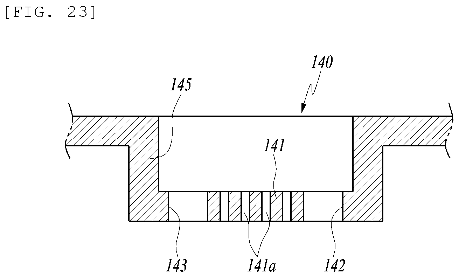

FIG. 23 is a sectional view illustrating an exhaust portion of an insulating member according to the ninth embodiment of the present disclosure.

Referring to FIG. 23, since the secondary battery according to the present embodiment has the same structure as the secondary battery according to the first embodiment described above, except for the insulating member, overlapping descriptions of the same structure will be omitted.

The exhaust portion 140 may include a support frame 145 protruding downwardly in a ring shape, a porous plate 141 formed at the bottom thereof, and a plurality of discharge openings 142 and 143.

The porous plate 141 may be disposed in the center of the bottom of the exhaust portion 140, and the discharge openings 142 and 143 may be formed on both sides of the porous plate 141. The porous plate 141 may be disposed between the discharge openings 142 and 143, and a plurality of holes 141a may be formed in the porous plate 141.

When the porous plate 141 is disposed in the center of the exhaust portion 140, and the discharge openings 142 and 143 are formed on both sides of the porous plate 141 as in the present embodiment, it is possible to prevent or suppress a large amount of foreign matters from being ejected through the center of the exhaust portion 140, and the discharge passage of a gas may be reliably secured even when the porous plate 141 is clogged.

While embodiments of the present disclosure have been described, one of ordinary skill in the art may make various modifications and changes to the present disclosure by adding, changing, deleting, or adding components within the scope that does not depart from the idea of the present disclosure set forth in the claims, and the modifications and changes also fall within the scope of the present disclosure.

## Claims

1. A secondary battery comprising:
an electrode assembly with a positive electrode and a negative electrode;
a case into which the electrode assembly is inserted;
a cap plate coupled to the case; and
an insulating member disposed between the cap plate and the electrode assembly;
wherein the insulating member includes a guide hole located below an electrolyte injection hole formed in the cap plate, and a guide protruding downwardly from the guide hole to facilitate a movement of an electrolyte.

2. The secondary battery according to claim 1, wherein the guide includes a support disposed below the guide hole to partially block the guide hole, and an inner hole formed in the support to allow a movement of a fluid therethrough.

3. The secondary battery according to claim 2, wherein the inner hole faces the electrolyte injection hole.

4. The secondary battery according to claim 2, wherein the inner hole is located in a longitudinal center of the guide.

5. The secondary battery according to claim 2, wherein the guide further includes a guide rim surrounding a lower portion of the guide hole, and the support is fixed to the guide rim.

6. The secondary battery according to claim 5, wherein the guide further includes a first opening and a second opening formed between lateral ends of the support and an inner wall of the guide rim.

7. The secondary battery according to claim 2, wherein a width of the support is 0.2 times to 0.6 times a diameter of the guide hole.

8. The secondary battery according to claim 2, wherein a diameter of the inner hole is formed to be smaller than a diameter of the electrolyte injection hole, and the inner hole is located in a lower region corresponding to the electrolyte injection hole.

9. The secondary battery according to claim 2, wherein a width of the support is formed to be larger than a diameter of the electrolyte injection hole.

10. The secondary battery according to claim 2, wherein the support includes a first inclined bar and a second inclined bar that are formed to incline downwardly from an outer periphery of the guide hole toward a center thereof.

11. The secondary battery according to claim 2, wherein the inner hole is formed with a diameter gradually increasing downward.

12. The secondary battery according to claim 2, wherein the support includes a wedge of which cross-sectional area gradually decreases downward.

13. The secondary battery according to claim 12, wherein an impact-absorbing bar is formed in the inner hole to extend in a diameter direction of the inner hole.

14. The secondary battery according to claim 2, wherein the inner hole includes one inlet and a plurality of outlets.

15. The secondary battery according to claim 2, wherein the inner hole includes an upper passage extending inwardly from an upper surface of the inner hole, and a plurality of lower passages inclined with respect to the upper passage.

16. The secondary battery according to claim 5, wherein a plurality of auxiliary holes is formed in the guide rim, to be arranged along a circumferential direction of the guide rim.

17. The secondary battery according to claim 1, wherein a vent hole is formed in the cap plate to discharge a gas,
the insulating member includes an exhaust portion protruding downwardly and including a plurality of discharge openings, and
the exhaust portion is disposed below the vent hole.

18. The secondary battery according to claim 17, wherein the exhaust portion includes a support frame protruding downwardly in a ring shape, and a plurality of blocking bars fixed to the support frame and extending in a width direction of the insulating member.

19. The secondary battery according to claim 17, wherein each of the plurality of discharge openings is formed with a cross-sectional area gradually increasing toward the cap plate.

20. The secondary battery according to claim 17, wherein a porous plate is provided in a bottom of the exhaust portion, and the porous plate is disposed between the plurality of discharge openings.

21. The secondary battery according to claim 1, wherein in the cap plate, a terminal hole is formed into which a terminal electrically connected to the electrode assembly is inserted, and a coupling protrusion is formed to protrude toward the insulating member and surround the terminal hole, and
in the insulating member, a coupling groove is formed into which the coupling protrusion is inserted.

22. The secondary battery according to claim 21, wherein in an inner side of the coupling protrusion of the cap plate, a lower groove is formed into which a gasket and the insulating member are inserted, and
in an inner side of the coupling groove of the insulating member, a sealing rim is formed to be inserted into the lower groove.

23. The secondary battery according to claim 1, wherein when a length of the insulating member is DL1, and a width of the insulating member is DW1, 8DW1≤DL1≤15DW1 is satisfied.

24. The secondary battery according to claim 23, wherein the length of the insulating member is 190 mm to 310 mm, and the width of the insulating member is 18 mm to 82 mm.

25. The secondary battery according to claim 1, wherein when a thickness of the insulating member is DT1, and a thickness of the cap plate is CT1, 0.4CT1≤DT1≤0.9CT1 is satisfied.

26. The secondary battery according to claim 25, wherein the thickness of the insulating member is 0.9 mm to 1.8 mm, and the thickness of the cap plate is 1.5 mm to 3.5 mm.
